# EUROPEAN PATENT SPECIFICATION

(11) **EP 4 097 044 B1**
(45) Date of publication and mention of the grant of the patent: **19.08.2026**
(21) Application number: 21702012.2
(22) Date of filing: 26.01.2021
(51) Int. Cl.: C01B 3/025, C01B 3/382, F02C 3/20, F02C 6/00

(54) **REFORMING PROCESS INTEGRATED WITH GAS TURBINE GENERATOR**
MIT EINEM GASTURBINENGENERATOR INTEGRIERTES REFORMIERUNGSVERFAHREN
PROCESSUS DE REFORMAGE INTÉGRÉ AVEC GÉNÉRATEUR À TURBINE À GAZ

(30) Priority: 31.01.2020 EP 20154859
(43) Date of publication of application: 07.12.2022
(60) Divisional application: 23185619.6 / 4 230 854
(73) Proprietor: CASALE SA, 6900 Lugano (CH)
(72) Inventor: CORBETTA, Michele, 22100 Como (IT); BIALKOWSKI, Michal Tadeusz, 5417 Untersiggenthal (CH); BARATTO, Francesco, 22100 Como (IT); OSTUNI, Raffaele, 6900 Lugano (CH)
(74) Representative: M. Zardi & Co S.A.
(86) International application number: PCT/EP2021/051747
(87) International publication number: WO 2021/151885

(56) References cited:
- EP-A1- 2 233 433
- EP-A2- 0 106 076
- WO-A1-2011/150090
- US-A- 5 048 284
- US-B2- 7 707 837

## Description

### Field of the invention

The present invention relates to the field of the production of a synthesis gas by reforming of a hydrocarbon-containing gas for the production of ammonia makeup gas. The invention relates to integration of such reforming process with a gas turbine generator.

### Prior art

The production of a hydrogen-containing gas, particularly of ammonia makeup gas, is typically based on the conversion of a hydrocarbon source gas, such as natural gas, into a synthesis gas in a reformer, preferably an autothermal reformer (ATR) possibly after a preliminary reforming step performed in a suitable pre-reformer. The so obtained reformed synthesis gas is further processed in a shift section and decarbonized in a dedicated process unit, to separate a CO₂-depleted synthesis gas and a stream of concentrated CO₂. The production of ammonia makeup gas may include the addition of nitrogen to achieve a proper hydrogen to nitrogen ratio in the syngas.

The CO₂-depleted synthesis gas is partially sent to the subsequent process sections, e.g. to produce ammonia, and partially used as a fuel for heat and power generation. The concentrated CO₂ stream is typically compressed and delivered outside the plant or stored. The carbon dioxide capture and storage or carbon dioxide capture, utilization and storage are fields of emerging interest particularly because the applicable norms in terms of CO₂ that can be discharged into atmosphere are becoming more restrictive.

The compression of the concentrated CO₂ for storage, in particular, requires a great amount of power. CO₂ capture normally requires compression to a high pressure, for example 200 bar.

Integration of a reforming process with a gas turbine generator is known. The term gas turbine generator (GTG) denotes a gas turbine engine coupled to a generator. The gas turbine engine essentially comprises a compressor, a combustor and a gas turbine.

The underlying principle of integration between a reforming process and a GTG is to use some of the available hydrocarbon gas and/or some of the synthesis gas to produce power which is internally used in the process itself. In the prior art a GTG coupled to a reforming process is designed to achieve the maximum output in terms of mechanical power from the turbine and, consequently, of electric energy. Therefore the GTG is conventionally arranged in a combined cycle which means that the hot exhaust gas of the gas turbine is used in a waste heat recovery section to produce steam and run a steam turbine for generation of additional power.

The reforming process also requires a heat input typically to preheat one or more process streams. For example a heat input is required by desulphurization and pre-heating before reforming. This heat input according to the prior art is furnished by one or more fired-heaters. Said fired heaters are fueled with natural gas or another fuel gas with a substantial content of carbon, leading to high carbon emissions to the atmosphere.

The reforming process also requires a certain amount of steam during transients such as start-up. This steam must be generated rapidly as required and is produced in one or more auxiliary boilers because the integrated combined-cycle GTG is devoted to the production of power. However the use of auxiliary boilers introduces some drawbacks.

A first drawback is the capital cost of the auxiliary boilers. A second drawback is that auxiliary boilers may introduce a source of CO₂, particularly if they are fired with a hydrocarbon fuel. A third drawback is represented by the parasitic load of the auxiliary boilers. The parasitic load derives from the necessity to keep each auxiliary boiler running at a minimum load, for the boiler to be able to rapidly inject more steam when required during transients. The steam generation associated is detrimental for two reasons: firstly, the auxiliary boiler has a poor efficiency at such reduced load; secondly, the gas turbine generator is reduced in size while the steam turbine generator is increased in size by the corresponding flow of steam generated at the minimum load, leading to a lower overall efficiency of electric power generation.

US 7 707 837 B2 discloses a steam reforming system with high thermal efficiency involving a gas turbine.

### Summary of the invention

The invention concerns a process and plant according to the attached independent claims. Preferred embodiments are described in the dependent claims.

The invention is based on the thermal integration of a gas turbine with the process of generation of the hydrogen-containing synthesis gas. Thermal integration means that the hot exhaust gas of the gas turbine, optionally after a post-firing, is the heat source for one or more pre-heating steps of the reforming process, rather than for producing steam for a steam turbine.

The heat recoverable from the exhaust gas of the gas turbine is used for one or more of: preheating a hydrocarbon-containing gas prior to reforming; preheating a hydrocarbon-containing gas prior to pre-reforming; preheating a hydrocarbon-containing gas prior to removal of sulphur from the feed of the reforming section. The heat from the gas turbine exhaust gas may also be used for steam superheating, heating a boiler feed water, preheating the fuel of the turbine prior to its combustion. The heat is transferred indirectly i.e. through heat exchange surface. The term of exhaust gas denotes the exhaust gas withdrawn from the gas turbine possibly after a post-firing.

Preferably the heat of one or more of the above preheating steps is fully provided by the gas turbine exhaust gas. Accordingly the need of fired-heaters is reduced or no fired-heater is required for the reforming process avoiding the associated carbon emission to the atmosphere.

Preferably the steam needed during transients is generated using a portion of the gas turbine exhaust gas. Accordingly the need of auxiliary boilers is reduced or no auxiliary boiler is required for the reforming process. Preferably the GTG is used also as start-up unit in lieu of the commonly installed auxiliary boiler.

The invention mitigates or removes the drawbacks of auxiliary boilers as above discussed including the capital cost and the parasitic loads. In addition the invention is of great interest for reducing the CO₂ emissions particularly because the gas turbine can be fired partially or in full with the hydrogen-containing synthesis gas, thus having a low-CO₂ or virtually CO₂-free combustion. The corresponding elimination of auxiliary boilers removes a considerable source of CO₂ because the boilers generally run on natural gas or other hydrocarbons.

In the invention the gas turbine is thermally integrated with the reforming process.

The term of thermal integration denotes that a substantial amount of the energy transferred from the gas turbine to the reforming process is in the form of heat which is used to preheat one or more process streams. This feature is in contrast with the prior art of gas turbine integration with reforming where the energy transferred from the gas turbine to the reforming process is predominantly or exclusively in the form of electric energy.

The invention concerns the production of ammonia. The reforming of hydrocarbon gas in such a case is performed in a front-end of an ammonia process for generation of ammonia makeup gas. The ammonia makeup gas is a gas including hydrogen and nitrogen suitable for the synthesis of ammonia. The gas has therefore a hydrogen to nitrogen ratio of 3 or close to 3. The hydrogen-containing gas generated in the reforming process may include the necessary nitrogen introduced with air or enriched air, or nitrogen may be added separately.

The invention is particularly adapted to implement a process for the synthesis of ammonia with high carbon capture and low CO₂ emissions. The invention is also advantageous for combined ammonia-urea production.

### Description of preferred embodiments

The exhaust gas of the gas turbine engine transfers heat to one or more of the above-mentioned preheating steps with a indirect heat exchange. This term denotes that the heat transferring medium (hot medium) and the heat receiving medium (cold medium) do not come into contact and mix. The hot medium and the cold medium traverse two separate sides of a heat exchanger, for example inside and outside tubes of a tube heat exchanger. So for example the heat exhaust gas traverses a first side of the heat exchanger and the process fluid traverses a second side of said heat exchanger, and heat is transferred from the exhaust gas to the process fluid while they traverse the first side and second side of the heat exchangers.

In a preferred embodiment, one or more of the above preheating steps are performed. The preheating steps are preferably performed in a sequence according to a decreasing temperature, so that the exhaust gas effluent of one preheating process of the sequence can be used as heat source for the subsequent process of the sequence. Generally the preheating prior to reforming requires the highest temperature and can be followed by the preheating prior to pre-reforming and then by the preheating prior to removal of sulphur.

In accordance with the above, a preferred embodiment includes: a first preheating process according wherein exhaust gas from the gas turbine engine transfers heat to a hydrocarbon gas prior to reforming; a second preheating process wherein exhaust gas cooled after said first preheating process transfers heat to a hydrocarbon gas prior to a pre-reforming; a third preheating process wherein exhaust gas further cooled after the second preheating process transfers heat to a hydrocarbon gas prior to a desulphurization process.

Particularly preferably, the full amount of heat transferred to the hydrocarbon gas in all the above listed preheating processes is provided by the exhaust gas of the gas turbine engine. This means that no fired-heater is required for the mentioned preheating processes.

Particularly preferably, the additional steam needed during transients is provided by the exhaust gas of the gas turbine engine. This means that no auxiliary boiler is required for generating that steam. The preheating prior to reforming is performed prior to admission of the hydrocarbon-containing gas in an autothermal reformer. The preheating prior to pre-reforming may be performed prior to admission of the hydrocarbon-containing gas in a suitable pre-reformer. The preheating prior to removal of sulphur may be performed prior to admission to a suitable unit for desulphurization, for example hydrodesulphurization (HDS).

The reforming is autothermal reforming, which is performed in an autothermal reformer (ATR).

In an embodiment, a process according to the invention includes pre-heating a boiler feed water. Preferably said preheating of boiler feed water is arranged in parallel to the preheating of desulphurization. The exhaust gas from the previous pre-heating process may be split between the preheating prior to desulphurization and pre-heating of boiler feed water.

In an embodiment, the process further includes steam superheating with exhaust gas as heat source. Said steam superheating is preferably performed first in the sequence, e.g. before the preheating of the feed to the autothermal reforming.

In an interesting embodiment, steam super-heating is performed using a portion of a waste heat at the outlet of a waste heat boiler of an autothermal reformer used in the reforming process. This feature results in a significant reduction of the amount of steam that is generated by process waste heat recovery, for example in an ammonia production process section. As a consequence, it allows to install a larger gas turbine and to produce more power leading to a significant increase in the overall process efficiency and lower overall gas consumption of the plant.

The invention includes a post-firing of the exhaust gas prior to one or more pre-heating process. The post-firing is performed by mixing the exhaust gas of the gas turbine with a CO₂-depleted hydrogen-containing gas generated in the process.

In the invention the gas turbine engine is fired with a fuel gas including a CO₂-depleted hydrogen-containing gas generated in the process, optionally mixed with natural gas. This feature reduces the CO₂ emissions caused by the gas turbine engine.

The gas turbine engine is fired with CO₂-depleted synthesis gas to reduce CO₂ emissions to the atmosphere. More preferably, the gas turbine engine is co-fired with a mixture of natural gas and CO₂-depleted synthesis gas, depending on the decarbonization level required for the overall plant which is strongly related with the maximum CO₂ emission limit.

The present invention includes a post-firing of exhaust gas of the gas turbine engine wherein the fuel of the gas turbine engine and the fuel used to post-fire the exhaust gas are a hydrogen-containing gas produced internally in the process and contain no more than 10% of carbon and preferably no more than 5% of carbon. Said fuel streams may be taken after (i.e. downstream) a step of removing CO2. Particularly preferably said fuel streams do not include any carbon-containing trim fuel. A related advantage is reducing the carbon emissions. For example reducing the carbon emissions of an ammonia synthesis process using the hydrogen-synthesis gas as a makeup gas for the production of ammonia.

In a highly preferred embodiment the gas turbine engine is fired with CO₂-depleted synthesis gas and the gas turbine exhaust gas used for pre-reformer and/or ATR feed pre-heating.

In a further embodiment the fuel of the gas turbine engine may be preheated using exhaust gas of the turbine itself as a heat source. This feature is preferred particularly if the gas turbine engine is fired with natural gas.

In certain embodiments the gas turbine can also be fed with ammonia or an ammonia-containing stream.

The compressor of the gas turbine engine may deliver more compressed air than required for subsequent combustion and expansion in the gas turbine and excess air may be delivered to an air separation unit (ASU), leading to a partial or full elimination of the dedicated air compressor, lower cost of the ASU, more efficiency and increased flexibility of the control of the gas turbine engine.

The inlet air of the gas turbine engine, i.e. inlet air of the related compressor, may be cooled down allowing to recover water condensate and to boost the gas turbine efficiency. This solution brings the advantage of reducing the water footprint of the overall plant and increasing gas turbine control flexibility.

In an embodiment, the exhaust gas of the gas turbine engine is delivered to a Heat Recovery Steam Generation (HRSG) unit during the plant start-up to produce steam for the reforming process, avoiding the installation of an auxiliary boiler. During the normal operation the HRSG unit is excluded with an exhaust gas bypass system and the hot exhaust gas is diverted to the heat recovery section to perform the above described process pre-heating (e.g. ATR pre-heating).

In another embodiment a heat storage block may be installed at the discharge of the gas turbine engine. The heat storage block may accumulate waste heat by heating a suitable medium, for example molten salts or other equivalent fluids. This scheme allows to accumulate heat during the plant start-up and to generate steam used as process steam and to drive the machines, avoiding the installation of an auxiliary boiler. During the normal operation, the heat storage block is excluded with an exhaust gas bypass system, and the hot exhaust gas is diverted to the heat recovery section to perform the above described process pre-heating.

The startup may be a transient during which a startup procedure is executed until the plant reaches a target output and a stable condition.

The advantage of the above options of a HRSG or heat storage block for use during startup is the reduction of the cost and the increase of the overall efficiency, particularly because the parasitic load of the auxiliary boilers is avoided.

In any case the gas turbine engine is arranged in a simple cycle and is not coupled with a heat recovery steam generator and steam turbine for production of electricity during normal operation. A heat recovery steam generator may be optionally provided only for use during startup.

The invention in its various embodiments introduces a significant reduction of the overall natural gas consumption and of overall CO₂ emissions to atmosphere compared to the prior art where an integrated gas turbine engine is used essentially to produce power in conjunction with a HRSG and steam turbine (combined cycle), process heat is furnished by fired heaters and steam for transients is generated by auxiliary boilers.

Still another interesting embodiment is a process whcih combines the following:
a) reforming is performed by pure autothermal reforming with low steam to carbon ratio, possibly with pre-reforming in an adiabatic reactor, but without a previous primary reforming;
b) superheated steam is generated by cooling the hot effluent of the autothermal reforming, prior to removal of carbon dioxide;
c) after removal of carbon dioxide the reformed gas is further purified by cryogenic condensation and removal of methane followed by liquid nitrogen wash to remove inerts.

In step a), a pure autothermal reforming is used, which denotes autothermal reforming in absence of primary reforming. In this connection, the term primary reforming denotes a reforming performed in a furnace with a radiant section including tubes filled with catalyst. The pure ATR however may be performed after a pre-reforming. The term of pre-reforming denotes a preliminary reforming step under adiabatic conditions, typically a fixed-bed adiabatic reactor. Preferably the autothermal reforming is performed at a steam to carbon ratio (S/C) of no more than 2.0.

An advantage of the above low-S/C pure ATR is reducing the amount of steam generated in the process and reducing the combustion of carbon-containing fuel in the reforming process. Reducing the amount of steam is an advantage because steam needs be superheated to produce useful energy and superheating is typically made at the expense of carbon-containing fuel. Still according to the invention, a lack of internally generated power due to the reduced steam production is compensated by the integrated gas turbine.

Step b) involves the generation of superheated steam with heat removed form the hot effluent of the autothermal reforming process of step a), preferably prior to CO2 removal. Hence, step b) is synergetic with the above mentioned step a) in that the reduced amount of steam is superheated with heat recovered internally in the process, thus without adding any carbon emissions. The so obtained superheated steam can be used to produce power (e.g. to drive a steam turbine) for internal use in the process.

The step c) includes cooling the gas until methane is liquified and can be removed, and performing a liquid nitrogen wash of the methane-depleted gas to remove inerts. The methane separated in the first step may be recycled as a feed gas of the reforming process. Inerts may be used as fuel as they contain no or little carbon, thus having no or little contribution to carbon emissions. Removing inerts and obtaining a substantially inert-free make up gas has the advantage of reducing compression power.

It can be appreaciated that steps a), b) and c) cooperate in a synergetic way to produce a hydrogen-containing gas with a low carbon footprint.

In a preferred embodiment at least some of the carbon dioxide removed from the reformed gas is compressed at a high pressure. The so obtained high-pressure carbon dioxide may stored under pressure (carbon capture) or further used for process purposes; a preferred use for the so obtained CO2 under pressure is enhanced oil recovery (EOR) and a particularly preferred use is a feed for the synthesis of urea. More specifically, the process of the invention may be used in ammonia-urea combined production wherein the process of the invention is used to produce ammonia make-up gas; the ammonia feeds the urea synthesis together with CO2 removed during purification of the synthesis gas.

The CO2 compression for use like EOR or storage is typically above 100 bar and preferably in the range 150 to 200 bar, This pressure is close to the typical synthesis pressure of urea from ammonia and carbon dioxide. Hence an aspect of the invention is the use of the compressed CO2 in the synthesis of urea. A related advantage is that the significant amount of power for CO2 compression may be produced by the integrated gas turbine. In certain embodiments the gas turbine may be coupled (with a single or multiple shaft arrangement) with a CO2 compressor.

In embodiments where high-pressure CO2 obtainable from the invention is used for EOR, the CO2 must contain very low concentration of O2. To remove oxygen the CO2 can be liquified and rectified and then recompressed. The heat from the gas turbine exhaust can be used also to provide the energy for the rectification process.

Hence another aspect of the invention is an enhanced oil recovery (EOR) process using high pressure CO2, wherein the high-pressure CO2 is obtained in a reforming process according to any of the embodiments described herein. Another aspect of the invention is a urea synthesis process wherein urea is synthesized from ammonia and CO2 and at least some of the CO2 is obtained at high pressure in a reforming process as above described.

The invention is now further elucidated with reference to preferred embodiments and with the help of the figures.

### Description of figures

Fig. 1 is a block diagram showing a gas turbine engine thermally integrated with a process for generation of hydrogen-containing synthesis gas, according to an embodiment.
Fig. 2 is a block diagram of a variant of the embodiment of Fig. 1.
Fig. 3 is a block diagram of another variant of the embodiment of Fig. 1.

### Detailed description

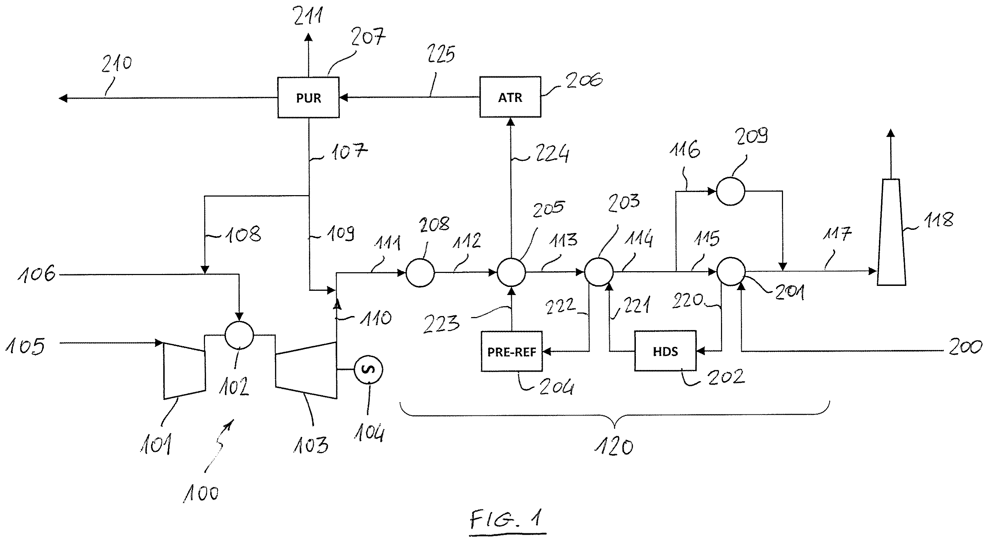

Fig. 1 illustrates the following items:
- 100: Gas turbine generator
- 101: Compressor
- 102: Combustor
- 103: Turbine
- 104: Generator
- 105: Air feed
- 106: Natural gas
- 107: CO₂-depleted synthesis gas
- 108: Firing portion of the CO₂-depleted synthesis gas
- 109: Post-firing portion of the CO₂-depleted synthesis gas
- 110: Exhaust gas
- 111: Exhaust gas after post-firing
- 112: Exhaust gas effluent from steam superheater
- 113: Exhaust gas effluent from ATR pre-heater
- 114: Exhaust gas effluent from prereformer preheater
- 115: Exhaust gas for HDS preheater
- 116: Exhaust gas for BFW preheater
- 117: Exhaust gas effluent after HDS and BFW preheaters
- 118: Chimney
- 200: Hydrocarbon gas
- 201: HDS preheater
- 202: HDS unit
- 203: Pre-reformer preheater
- 204: Pre-reformer
- 205: ATR preheater
- 206: ATR
- 207: Purification stage
- 208: Steam superheater
- 209: Boiler feed water (BFW) preheater
- 210: Hydrogen-containing gas
- 211: CO₂ stream
- 220: Preheated hydrocarbon gas
- 221: Desulphurized gas
- 222: Feed to the pre-reformer 204
- 223: Pre-reformed gas
- 224: Feed to the ATR 206
- 225: Reformed gas effluent from the ATR 206

The block diagram of Fig. 1 illustrates a process where basically the hydrocarbon-containing gas 200 is converted into the reformed gas 210. The input gas 200 after preheating is treated in the HDS unit 202 to remove suphur. The so obtained desulphurized gas is subject to pre-reforming in the pre-reformer 204 and the so obtained pre-reformed gas is subject to autothermal reforming in the ATR 206. The pre-reforming and the autothermal reforming are preceded by a pre-heating in the heaters 203 and 205.

The output reformed gas 225 of the ATR 206 is further processed in a purification stage 207 to obtain the hydrogen-containing gas 210. The processing in the purification stage 207 includes removal of CO₂ and may include e.g. shift and methanation. The processing may also include the addition of nitrogen to obtain ammonia makeup synthesis gas. The removal of CO₂ generates a stream 211 of CO₂ separated from the input gas.

The gas turbine generator 100 includes a gas turbine engine and a generator 104. The gas turbine engine includes a compressor 101, a combustor 102 and a turbine 103.

The gas turbine generator 100 is thermally integrated with the above described process of reforming and synthesis gas generation. Particularly, the gas turbine generator 100 is thermally integrated with a heat recovery section denoted by 120 for process pre-heating.

A CO₂-depleted synthesis gas 108 obtained in the reforming process, more precisely in the purification stage, fuels the gas turbine generator 100 together with natural gas 106.

Said CO₂-depleted synthesis gas 108 is a portion of a gas stream 107 withdrawn from the purification stage 207 after removal of CO₂. Another portion 109 of said gas is used for post-firing as illustrated.

The fuel gas including the CO₂-depleted synthesis gas 108 and the natural gas 106 meets compressed air delivered by the compressor 101 in the combustor 102; the combustion fumes expands in the gas turbine 103 which drives the generator 104; hot exhaust gas 110 are discharged by the turbine 103.

The electric energy produced by the generator 104 can be internally used by the reforming process, to power various items and auxiliaries including pumps and compressors for example. Among others, the energy produced by the generator 104 may be used for compression of the CO₂ stream 211.

In a variant, the gas turbine generator 100 may be fuelled entirely by the CO₂-depleted gas 108, i.e. without the addition of natural gas 106 or other fuels.

As illustrated the hot exhaust gas 110 leaving the turbine 103 is subject to optional post-firing by mixing with the gas 109. Post-firing can be performed because the gas 110 contains a certain amount of oxygen and increases the temperature of the gas.

The so obtained hot exhaust gas 111 after post-firing (or the gas 110 in case of no post-firing), is the heat source of the steam superheater 208, the ATR preheater 205, the pre-reformer preheater 203, the HDS preheater 201 and the BFW preheater 209. The hot gas 111 is progressively cooled until it becomes the cooled exhaust gas 117 which is discharged via the chimney 118. The hot gas 114 effluent from the pre-reformer preheater 203 is split into a portion 115 which provides the heat source of the HDS pre-heater 201 and another portion 116 which provides the heat source of the BFW pre-heater 209. The effluents from said heaters join to form the stream 117.

It should be noted that the hot exhaust gas transfers heat to the superheater 208, the ATR preheater 205, the pre-reformer preheater 203 and the parallel of the HDS preheater 201 and the BFW preheater 209 in this order, according to the temperature required by the concerned pre-heating processes.

The above mentioned preheaters are indirect heat exchangers of a known type, for example tube heat exchangers.

With regard to the process side, the line 220 denotes the pre-heated gas fed to the HDS unit 202. The desulphurized gas 221 from said unit 202 is heated in the preheater 203 and the so obtained gas 222 is fed to the pre-reformer 204. The so obtained pre-reformed gas 223 is heated in the preheater 205 to form the feed 224 of the ATR.

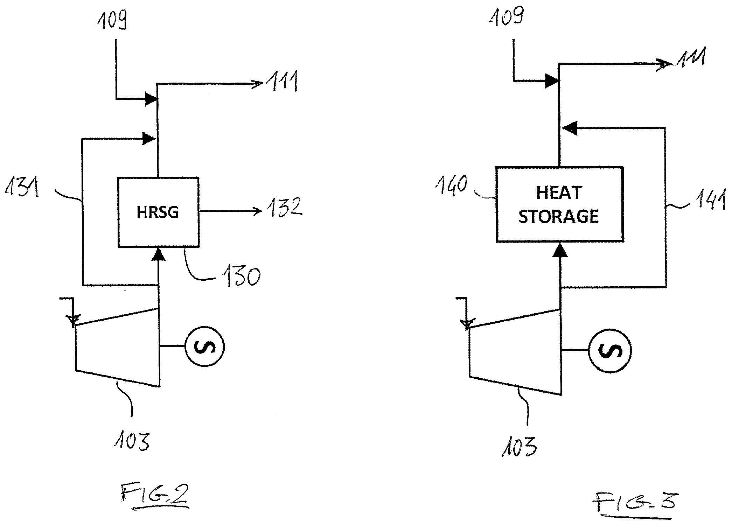

Fig. 2 illustrates an embodiment where a heat recovery steam generator 130 is provided at the output of the turbine 103. The exhaust gas of the turbine can bypass said generator 130 via a bypass conduit 131. The steam generator 120 is used unit during the start-up to produce steam for the process. When the HRSG is in use during startup, the cooled gas 132 leaving the HRSG may be sent to the chimney 118. During normal operation (after the startup procedure is completed), the exhaust gas of the turbine bypasses the HRSG via the line 131 and forms the exhaust gas directed to the preheaters.

Fig. 3 illustrates another embodiment where a heat storage block 140 is provided at the output of the turbine 103. The exhaust gas of the turbine can bypass said heat storage block 140 via a bypass conduit 141. Similarly to the above described generator 120, the storage block 130 is used unit during the start-up to produce steam for the process. During normal operation, the storage block is bypassed via the line 141.

### Example

The following Table 1 compares two exemplary ammonia processes of the prior art with ammonia processes according to two embodiments of the invention.

Cases [1] and [2] refer to an ammonia process integrated with a combined-cycle gas turbine generator for the production of electricity, where process heat of the reforming process is provided by one or more fired heaters. Particularly, case [1] refers to a prior-art configuration with a 100% natural gas-fired gas turbine; Case [2] refers to a prior-art configuration with a 100% CO₂-depleted synthesis gas-fired gas turbine, i.e. wherein the gas turbine is fired with a portion of the CO₂-depleted synthesis gas produced in the reforming process.

Cases [3] and [4] refer to embodiments of the invention with a thermally integrated simple-cycle gas turbine according to Fig. 1. Case [3] relates to a co-fired gas turbine (fired with natural gas and CO₂-depleted synthesis gas) and case [4] refers to an embodiment with a natural gas-fired gas turbine.

The following advantages can be noted in Table 1:
the overall natural gas consumption of the invention, including captured CO₂ compression and electric power generation, is 0.15 to 0.40 Gcal/tNH3 lower than the prior art, depending on the percentage of CO₂-depleted synthesis gas used for electric power generation;
the invention reaches CO₂ emissions lower than 0.2 tons of CO₂ per ton of produced ammonia, as in the co-fired embodiment.

**Table 1**

| | [1] Prior art NG-fired Combined Cycle | [2] Prior art H₂-fired Combined Cycle | [3] Invention ATR front-end + Integration, co-fired | [4] Invention ATR front-end GTG Integration, NG-fired |
|---|---|---|---|---|
| Overall natural gas consumption Gcal / t NH₃ | 7.38 | 7.49 | 7.25 | 7.08 |
| Natural gas feed (process) Gcal / t NH₃ | 6.75 | 7.14 | 6.94 | 6.19 |
| Natural gas fuel (heat) Gcal / t NH₃ | - | 0.35 | - | 0.29 |
| Natural gas fuel (power) Gcal / t NH₃ | 0.63 | - | 0.31 | 0.60 |
| Overall CO₂ emissions to the atmosphere t CO₂ / t NH₃ | 0.22 | 0.18 | 0.17 | 0.28 |

## Claims

1. A process comprising:
reforming a hydrocarbon-containing gas to obtain a hydrogen-containing synthesis gas;
producing mechanical power with a gas turbine engine (100) and preferably electrical energy with a generator coupled to said gas turbine engine;
preheating at least one process stream of the reforming process wherein:
a heat source of said preheating includes exhaust gas of said gas turbine engine;
said preheating includes a heat transfer from said exhaust gas to said process stream and said heat transfer is performed in an indirect heat exchanger wherein the exhaust gas and the process stream do not mix;
said step of preheating at least one process stream of the reforming process includes:
a) preheating a hydrocarbon-containing gas prior to reforming of said hydrocarbon-containing gas in an autothermal reformer, ATR, (206); and
b) optionally preheating a hydrocarbon-containing gas prior to pre-reforming of said hydrocarbon-containing gas in a pre-reformer (204); and
c) optionally preheating a hydrocarbon-containing gas directed to a reforming process prior to removal of sulphur from said hydrocarbon-containing gas;
said process including:
- using the hydrogen-containing synthesis gas as a makeup gas for the synthesis of ammonia optionally after addition of nitrogen;
- firing the gas turbine engine with a fuel gas including a CO₂-depleted hydrogen-containing gas generated in the process, optionally mixed with natural gas; and
- post-firing of the exhaust gas prior to one or more pre-heating process, the post-firing being performed by mixing the exhaust gas with a CO₂-depleted hydrogen-containing gas generated in the process.

2. A process according to claim 1, wherein the gas turbine engine operates with a simple cycle where no heat from the exhaust gas of said gas turbine engine is used in a heat recovery steam generator to produce steam for a steam turbine.

3. A process according to claim 1 or 2, wherein said heat exhaust gas traverses a first side of said indirect heat exchanger and the process fluid traverses a second side of said heat exchanger, and heat is transferred from the exhaust gas to the process fluid while they traverse the first side and second side of the heat exchangers.

4. A process according to any of claims 1 to 3, wherein exhaust gas from the gas turbine engine transfers heat to preheating processes according to two or more of the options a) to c) and in a sequence according to the order a) to c), so that the exhaust gas effluent of one preheating process of the sequence is used as heat source for the subsequent process of the sequence, in accordance with said order.

5. A process according to claim 4, including: a first preheating process according to option a) wherein exhaust gas from the gas turbine engine transfers heat to a hydrocarbon gas prior to reforming; a second preheating process according to option b) wherein exhaust gas cooled after said first preheating process transfers heat to a hydrocarbon gas prior to a pre-reforming; a third preheating process according to step c) wherein exhaust gas further cooled after the second preheating process transfers heat to a hydrocarbon gas prior to a desulphurization process.

6. A process according to claim 5, wherein the full amount of heat transferred to the hydrocarbon gas in each of the preheating processes according to a), b) and c) is provided by the exhaust gas of a steam turbine.

7. A process according to claim 5 or 6, further including a process of pre-heating of a boiler feed water which is in parallel to the third preheating process of option c) and wherein the exhaust gas from the second pre-heating process of option b) is split between the third pre-heating process and said parallel pre-heating of boiler feed water.

8. A process according to claim 4, further including a step of steam superheating with exhaust gas as heat source, said steam superheating being performed first in the sequence.

9. A process according to any of the previous claims, including a post-firing of exhaust gas of the gas turbine engine wherein the fuel of the gas turbine engine and the fuel used to post-fire the exhaust gas is a hydrogen-containing gas produced internally in the process and contain no more than 10% of carbon and preferably no more than 5% of carbon.

10. A process according to any of the previous claims, wherein: at least some of the carbon dioxide removed from the reformed gas is compressed at a high pressure above 100 bar and preferably in the range 150 to 200 bar, and the so obtained high-pressure carbon dioxide is stored under pressure for carbon capture or used for enhanced oil recovery or for the synthesis of urea.

11. A process according to claim 10, wherein high-pressure carbon dioxide is used for enhanced oil recovery, wherein said carbon dioxide is liquified, rectified and recompressed for use in the enhanced oil recovery, wherein heat from the exhaust of the gas turbine is used to provide energy input of the rectification of the CO2.

12. A plant for producing a hydrogen-containing gas comprising:
a reforming section (206) arranged to reform a hydrocarbon source to obtain a hydrogen-containing gas;
a gas turbine engine (100) which is integrated in the process and configured to be fired with a fuel gas including a CO₂-depleted hydrogen-containing gas generated in the process, optionally mixed with natural gas;
at least one pre-heater (201, 203, 205) configured as an indirect heat exchanger having a first side and a second side, arranged to preheat at least one process fluid of the reforming process using exhaust gas of the gas turbine engine as a heat source, wherein:
the first side is configured to be traversed by exhaust gas of the gas turbine after a post-firing performed by mixing the exhaust gas with a CO₂-depleted hydrogen-containing gas generated in the process;
the second side is configured to be traversed by a process fluid of the reforming process which is:
a) a hydrocarbon-containing gas prior to admission in an autothermal reformer, ATR, for a step of reforming; and
b) optionally a hydrocarbon-containing gas prior to admission in a pre-reformer (204) for a pre-reforming step; and
c) optionally a hydrocarbon-containing gas prior to admission in a desulphurizator (202) for removal of sulphur from a feed of said reforming section;
wherein the plant is a front-end of an ammonia synthesis plant for production of ammonia make-up gas.

13. A plant according to claim 12, further including a heat recovery steam generator or a heat storage block for recovering heat from the exhaust gas of the gas turbine engine use during startup of the plant, and a bypass line arranged to provide that the exhaust gas of the gas turbine engine can bypass the heat recovery steam generator or a heat storage block after startup is completed and during normal operation.

14. A plant according to claim 12 or 13, comprising no auxiliary boiler for providing heat for any of the preheating processes according to options a) and optionally b) and/or c).

15. A plant according to any of the previous claims 12-14, wherein the gas turbine engine is arranged in a simple cycle and is not coupled with a heat recovery steam generator and steam turbine for production of electricity.

## Patentansprüche

1. Verfahren, umfassend:
Reformieren eines kohlenwasserstoffhaltigen Gases, um ein wasserstoffhaltiges Synthesegas zu erhalten;
Erzeugen von mechanischer Leistung mit einem Gasturbinenmotor (100) und vorzugsweise von elektrischer Energie mit einem mit dem Gasturbinenmotor gekoppelten Generator; Vorwärmen mindestens eines Prozessstroms des Reformierungsprozesses, wobei: eine Wärmequelle des Vorwärmens Abgas des Gasturbinenmotors einschließt;
das Vorwärmen eine Wärmeübertragung von dem Abgas auf den Prozessstrom einschließt und die Wärmeübertragung in einem indirekten Wärmetauscher durchgeführt wird, wobei das Abgas und der Prozessstrom nicht vermischt werden;
der Schritt des Vorwärmens von mindestens einem Prozessstrom des Reformierungsprozesses Folgendes einschließt:
a) Vorwärmen eines kohlenwasserstoffhaltigen Gases vor Reformieren des kohlenwasserstoffhaltigen Gases in einem autothermen Reformer, ATR, (206); und
b) gegebenenfalls Vorwärmen eines kohlenwasserstoffhaltigen Gases vor Vorreformieren des kohlenwasserstoffhaltigen Gases in einem Vorreformer (204); und
c) gegebenenfalls Vorwärmen eines kohlenwasserstoffhaltigen Gases, das in einen Reformierungsprozess geleitet wird, vor Entfernen von Schwefel aus dem kohlenwasserstoffhaltigen Gas;
wobei das Verfahren Folgendes einschließt:
- Verwenden des wasserstoffhaltigen Synthesegases als Frischgas zur Synthese von Ammoniak, gegebenenfalls nach Zugabe von Stickstoff;
- Befeuern des Gasturbinenmotors mit einem Brenngas, das ein CO₂-abgereichertes wasserstoffhaltiges Gas enthält, das im Verfahren erzeugt wurde, gegebenenfalls vermischt mit Erdgas; und
- Nachbefeuern des Abgases vor dem einen oder den mehreren Vorwärmprozessen, wobei das Nachbefeuern durch Mischen des Abgases mit einem CO₂-abgereicherten wasserstoffhaltigen Gas durchgeführt wird, das im Verfahren erzeugt wurde.

2. Verfahren nach Anspruch 1, wobei der Gasturbinenmotor mit einem einfachen Kreisprozess arbeitet, bei dem keine Wärme vom Abgas des Gasturbinenmotors in einem Abhitzedampferzeuger verwendet wird, um einen Dampf für eine Dampfturbine zu erzeugen.

3. Verfahren nach Anspruch 1 oder 2, wobei das Brennabgas eine erste Seite des indirekten Wärmetauschers durchquert und das Prozessfluid eine zweite Seite des Wärmetauschers durchquert und Wärme von dem Abgas auf das Prozessfluid übertragen wird, während sie die erste Seite und zweite Seite des Wärmetauschers durchqueren.

4. Verfahren nach einem der Ansprüche 1 bis 3, wobei Abgas aus dem Gasturbinenmotor Wärme gemäß zwei oder mehreren der Optionen a) bis c) und in einer Abfolge gemäß der Reihenfolge a) bis c) an die Vorwärmprozesse überträgt, sodass das aus einem Vorwärmprozess der Abfolge ausströmende Abgas als Wärmequelle für den nachfolgenden Prozess der Abfolge in Übereinstimmung mit der Reihenfolge verwendet wird.

5. Verfahren nach Anspruch 4, das Folgendes einschließt: einen ersten Vorwärmprozess gemäß Option a), wobei Abgas aus dem Gasturbinenmotor vor Reformieren Wärme an ein Kohlenwasserstoffgas überträgt; einen zweiten Vorwärmprozess gemäß Option b), wobei nach dem ersten Vorwärmprozess abgekühltes Abgas vor einem Vorreformieren Wärme an ein Kohlenwasserstoffgas überträgt; einen dritten Vorwärmprozess gemäß Schritt c), wobei nach dem zweiten Vorwärmprozess weiter abgekühltes Abgas vor einem Entschwefelungsprozess Wärme an ein Kohlenwasserstoffgas überträgt.

6. Verfahren nach Anspruch 5, wobei die vollständige Menge von an das Kohlenwasserstoffgas in jedem der Vorwärmprozesse gemäß a), b) und c) übertragene Wärme durch das Abgas einer Dampfturbine bereitgestellt wird.

7. Verfahren nach Anspruch 5 oder 6, weiter einschließend einen Prozess des Vorwärmens eines Kesselspeisewassers, der parallel zum dritten Vorwärmprozess nach Option c) ist, und wobei das Abgas aus dem zweiten Vorwärmprozess nach Option b) auf den dritten Vorwärmprozess und das parallele Vorwärmen des Kesselspeisewassers aufgeteilt wird.

8. Verfahren nach Anspruch 4, weiter einschließend einen Schritt des Dampfüberhitzens mit Abgas als Wärmequelle, wobei das Dampfüberhitzen in der Abfolge zuerst durchgeführt wird.

9. Verfahren nach einem der vorstehenden Ansprüche, das ein Nachbefeuern mit Abgas aus dem Gasturbinenmotor einschließt, wobei der Kraftstoff des Gasturbinenmotors und der zum Nachbefeuern des Abgases verwendete Kraftstoff ein wasserstoffhaltiges Gas ist, das intern im Verfahren erzeugt wird und nicht mehr als 10 % Kohlenstoff und vorzugsweise nicht mehr als 5 % Kohlenstoff enthält.

10. Verfahren nach einem der vorstehenden Ansprüche, wobei: mindestens ein Teil des aus dem reformierten Gas entfernten Kohlenstoffdioxids unter hohem Druck von über 100 bar und vorzugsweise im Bereich 150 bis 200 bar verdichtet wird und das so erhaltene Hochdruck-Kohlenstoffdioxid unter Druck für Kohlenstoffabscheidung gelagert oder für verbesserte Ölrückgewinnung oder für die Synthese von Urea verwendet wird.

11. Verfahren nach Anspruch 10, wobei Hochdruck-Kohlenstoffdioxid für verbesserte Ölrückgewinnung verwendet wird, wobei das Kohlenstoffdioxid zur Verwendung in der verbesserten Ölrückgewinnung verflüssigt, rektifiziert und wiederverdichtet wird, wobei Wärme vom Abgas der Gasturbine verwendet wird, um Energiezufuhr zur Rektifikation des CO₂ bereitzustellen.

12. Anlage zum Erzeugen eines wasserstoffhaltigen Gases, umfassend:
einen Reformierungsabschnitt (206), der so angeordnet ist, dass er eine Kohlenwasserstoffquelle reformiert, um ein wasserstoffhaltiges Gas zu erhalten;
einen Gasturbinenmotor (100), der in das Verfahren integriert ist und so ausgebildet ist, dass er mit einem Brenngas befeuert wird, das ein CO₂-abgereichertes wasserstoffhaltiges Gas einschließt, das im Verfahren erzeugt wird, gegebenenfalls vermischt mit Erdgas;
mindestens einen Vorwärmer (201, 203, 205), der als indirekter Wärmetauscher ausgebildet ist, der eine erste Seite und eine zweite Seite aufweist, die so angeordnet sind, dass sie mindestens ein Prozessfluid des Reformierungsprozesses unter Verwendung von Abgas des Gasturbinenmotors als Wärmequelle vorwärmen, wobei:
die erste Seite so ausgebildet ist, dass sie durch Abgas der Gasturbine durchquert wird, nach einer Nachbefeuerung, die durch Mischen des Abgases mit einem CO₂-abgereicherten wasserstoffhaltigen Gas durchgeführt wird, das im Verfahren erzeugt wird;
die zweite Seite so ausgebildet ist, dass sie durch ein Prozessfluid des Reformierungsprozesses durchquert wird, das Folgendes ist:
a) ein kohlenwasserstoffhaltiges Gas vor Einlass in einen autothermen Reformer, ATR, für einen Schritt des Reformierens; und
b) gegebenenfalls ein kohlenwasserstoffhaltiges Gas vor Einlass in einen Vorreformer (204) für einen Vorreformierungsschritt; und
c) gegebenenfalls ein kohlenwasserstoffhaltiges Gas vor Einlass in einen Entschwefler (202) zum Entfernen von Schwefel aus einer Einspeisung in den Reformierungsabschnitt:
wobei die Anlage eine Vorderanlage einer Ammoniaksyntheseanlage zur Erzeugung von Ammoniak-Frischgas ist.

13. Anlage nach Anspruch 12, weiter einschließend einen Abhitzedampferzeuger oder einen Wärmespeicherblock zur Rückgewinnung von Wärme aus Abgas des Gasturbinenmotors zur Verwendung während Hochfahrens der Anlage, und eine Umgehungsleitung, die so angeordnet ist, dass sie bereitstellt, dass das Abgas des Gasturbinenmotors den Abhitzedampferzeuger oder einen Wärmespeicherblock nach Abschluss des Hochfahrens und während des normalen Betriebs umgehen kann.

14. Anlage nach Anspruch 12 oder 13, die keinen Hilfskessel zum Bereitstellen von Wärme für einen der Vorwärmprozesse nach den Optionen a) und gegebenenfalls b) und/oder c) umfasst.

15. Anlage nach einem der vorstehenden Ansprüche 12-14, wobei der Gasturbinenmotor in einem einfachen Kreisprozess angeordnet ist und nicht mit einem Abhitzedampferzeuger und einer Dampfturbine zur Erzeugung von Elektrizität gekoppelt ist.

## Revendications

1. Procédé comportant :
le reformage d'un gaz contenant des hydrocarbures pour obtenir un gaz de synthèse contenant de l'hydrogène ;
la production d'une puissance mécanique avec un moteur à turbine à gaz (100) et de préférence
d'énergie électrique avec un générateur couplé audit moteur à turbine à gaz ; le préchauffage d'au moins un courant de procédé du procédé de reformage dans lequel : une source de chaleur dudit préchauffage inclut un gaz d'échappement dudit moteur à turbine à gaz ;
ledit préchauffage inclut un transfert de chaleur dudit gaz d'échappement audit courant de procédé et ledit transfert de chaleur est réalisé dans un échangeur de chaleur indirect dans lequel le gaz d'échappement et le courant de procédé ne se mélangent pas ; ladite étape de préchauffage d'au moins un courant de procédé du procédé de reformage inclut :
a) le préchauffage d'un gaz contenant des hydrocarbures avant le reformage dudit gaz contenant des hydrocarbures dans un reformeur autothermique, ATR (206) ; et
b) facultativement le préchauffage d'un gaz contenant des hydrocarbures avant le pré-reformage dudit gaz contenant des hydrocarbures dans un pré-reformeur (204) ; et
c) facultativement le préchauffage d'un gaz contenant des hydrocarbures dirigé vers un procédé de reformage avant l'élimination du soufre dudit gaz contenant des hydrocarbures ;
ledit procédé incluant :
- l'utilisation du gaz de synthèse contenant de l'hydrogène comme gaz d'appoint pour la synthèse d'ammoniac facultativement après ajout d'azote ;
- l'allumage du moteur à turbine à gaz avec un gaz combustible incluant un gaz contenant de l'hydrogène appauvri en CO₂ généré dans le procédé, facultativement mélangé avec du gaz naturel ; et
- le post-allumage du gaz d'échappement avant un ou plusieurs procédés de préchauffage, le post-allumage étant réalisé par le mélange du gaz d'échappement avec un gaz contenant de l'hydrogène appauvri en CO₂ généré dans le procédé.

2. Procédé selon la revendication 1, dans lequel le moteur à turbine à gaz fonctionne avec un cycle simple où aucune chaleur provenant du gaz d'échappement dudit moteur à turbine à gaz n'est utilisée dans un générateur de vapeur à récupération de chaleur pour produire de la vapeur pour une turbine à vapeur.

3. Procédé selon la revendication 1 ou 2, dans lequel ledit gaz d'échappement de chaleur traverse un premier côté dudit échangeur de chaleur indirect et le fluide de procédé traverse un deuxième côté dudit échangeur de chaleur, et de la chaleur est transférée du gaz d'échappement au fluide de procédé tandis qu'ils traversent le premier côté et le deuxième côté des échangeurs de chaleur.

4. Procédé selon l'une quelconque des revendications 1 à 3, dans lequel un gaz d'échappement provenant du moteur à turbine à gaz transfère de la chaleur à des procédés de préchauffage selon deux options ou plus parmi les options a) à c) et en une séquence selon l'ordre a) à c), de sorte que l'effluent de gaz d'échappement d'un procédé de préchauffage de la séquence soit utilisé comme source de chaleur pour le procédé ultérieur de la séquence, conformément audit ordre.

5. Procédé selon la revendication 4, incluant : un premier procédé de préchauffage selon l'option a) dans lequel un gaz d'échappement provenant du moteur à turbine à gaz transfère de la chaleur à un gaz d'hydrocarbures avant reformage ; un deuxième procédé de préchauffage selon l'option b) dans lequel un gaz d'échappement refroidi après ledit premier procédé de préchauffage transfère de la chaleur à un gaz d'hydrocarbures avant pré-reformage ; un troisième procédé de préchauffage selon l'étape c) dans lequel un gaz d'échappement refroidi davantage après le deuxième procédé de préchauffage transfère de la chaleur à un gaz d'hydrocarbures avant un procédé de désulfuration.

6. Procédé selon la revendication 5, dans lequel la quantité totale de chaleur transférée au gaz d'hydrocarbures dans chacun des procédés de préchauffage selon a), b) et c) est fournie par le gaz d'échappement d'une turbine à vapeur.

7. Procédé selon la revendication 5 ou 6, incluant en outre un procédé de préchauffage d'une eau d'alimentation de chaudière qui est en parallèle au troisième procédé de préchauffage de l'option c) et dans lequel le gaz d'échappement provenant du deuxième procédé de préchauffage de l'option b) est divisé entre le troisième procédé de préchauffage et ledit préchauffage parallèle d'eau d'alimentation de chaudière.

8. Procédé selon la revendication 4, incluant en outre une étape de surchauffe de vapeur avec un gaz d'échappement comme source de chaleur, ladite surchauffe de vapeur étant réalisée en premier dans la séquence.

9. Procédé selon l'une quelconque des revendications précédentes, incluant un post-allumage de gaz d'échappement du moteur à turbine à gaz dans lequel le combustible du moteur à turbine à gaz et le combustible utilisé pour post-allumer le gaz d'échappement est un gaz contenant de l'hydrogène produit de manière interne dans le procédé et ne contient pas plus de 10 % de carbone et de préférence pas plus de 5 % de carbone.

10. Procédé selon l'une quelconque des revendications précédentes, dans lequel : au moins une partie du dioxyde de carbone éliminé du gaz reformé est comprimée à une haute pression supérieure à 100 bar et de préférence dans la plage de 150 à 200 bar, et le dioxyde de carbone à haute pression ainsi obtenu est stocké sous pression pour une capture de carbone ou utilisé pour une récupération d'huile améliorée ou pour la synthèse d'urée.

11. Procédé selon la revendication 10, dans lequel du dioxyde de carbone à haute pression est utilisé pour une récupération d'huile améliorée, dans lequel ledit dioxyde de carbone est liquéfié, rectifié et recomprimé pour une utilisation dans la récupération d'huile améliorée, dans lequel de la chaleur provenant de l'échappement de la turbine à gaz est utilisée pour fournir un apport d'énergie de la rectification du CO2.

12. Installation pour la production d'un gaz contenant de l'hydrogène comportant :
une section de reformage (206) agencée pour reformer une source d'hydrocarbures pour obtenir un gaz contenant de l'hydrogène ;
un moteur à turbine à gaz (100) qui est intégré dans le procédé et configuré pour être allumé avec un gaz combustible incluant un gaz contenant de l'hydrogène appauvri en CO₂ généré dans le procédé, facultativement mélangé avec du gaz naturel ;
au moins un préchauffeur (201, 203, 205) configuré comme un échangeur de chaleur indirect ayant un premier côté et un deuxième côté, agencé pour préchauffer au moins un fluide de procédé du procédé de reformage à l'aide d'un gaz d'échappement du moteur à turbine à gaz comme source de chaleur, dans laquelle :
le premier côté est configuré pour être traversé par un gaz d'échappement de la turbine à gaz après un post-allumage réalisé par le mélange du gaz d'échappement avec un gaz contenant de l'hydrogène appauvri en CO₂ généré dans le procédé ;
le deuxième côté est configuré pour être traversé par un fluide de procédé du procédé de reformage qui est :
a) un gaz contenant des hydrocarbures avant admission dans un reformeur autothermique, ATR, pour une étape de reformage ; et
b) facultativement un gaz contenant des hydrocarbures avant admission dans un pré-reformeur (204) pour une étape de pré-reformage ; et
c) facultativement un gaz contenant des hydrocarbures avant admission dans un désulfurateur (202) pour l'élimination du soufre d'une alimentation de ladite section de reformage ;
dans laquelle l'installation est une unité initiale d'une installation de synthèse d'ammoniac pour la production de gaz d'appoint d'ammoniac.

13. Installation selon la revendication 12, incluant en outre un générateur de vapeur à récupération de chaleur ou un bloc de stockage de chaleur pour la récupération de chaleur à partir du gaz d'échappement du moteur à turbine à gaz utilisé pendant le démarrage de l'installation, et une conduite de contournement agencée pour que le gaz d'échappement du moteur à turbine à gaz puisse contourner le générateur de vapeur à récupération de chaleur ou un bloc de stockage de chaleur après que le démarrage est achevé et pendant un fonctionnement normal.

14. Installation selon la revendication 12 ou 13, ne comportant aucune chaudière auxiliaire pour la fourniture de chaleur à l'un quelconque des procédés de préchauffage selon les options a) et facultativement b) et/ou c).

15. Installation selon l'une quelconque des revendications 12 à 14 précédentes, dans laquelle le moteur à turbine à gaz est agencé en un cycle simple et n'est pas couplé à un générateur de vapeur à récupération de chaleur et à une turbine à vapeur pour la production d'électricité.
